# EUROPÄISCHE PATENTSCHRIFT

(11) **EP 2 339 188 B1**
(45) Veröffentlichungstag und Bekanntmachung des Hinweises auf die Patenterteilung: **23.04.2014**
(21) Anmeldenummer: 10192361.3
(22) Anmeldetag: 24.11.2010
(51) Int. Cl.: F16B 25/00

(54) **Befestigungsschraube zum Verbinden von Dämmstoffplatten**
Fixing screw for combining insulating boards
Vis de fixation pour relier des plaques de matériaux isolants

(30) Priorität: 15.12.2009 DE 102009058199; 15.12.2009 DE 202009016865 U
(43) Veröffentlichungstag der Anmeldung: 29.06.2011
(73) Patentinhaber: Friedr. Trurnit GmbH, 58672 Altena (DE)
(72) Erfinder: Trurnit, Friedrich, 58762, Altena (DE)
(74) Vertreter: Albrecht, Dirk

(56) Entgegenhaltungen:
- EP-A1- 0 205 994
- EP-A1- 0 425 874
- EP-A1- 0 504 782
- DE-A1- 19 931 794
- DE-U1- 20 111 194

## Beschreibung

Die vorliegende Erfindung betrifft eine Befestigungsschraube zum Verbinden von Dämmstoffplatten mit einem Schraubenkopf, einem ein Gewinde aufweisenden Schraubenschaft und einer Schraubenspitze, wobei der von den Gewindeflanken eingeschlossene Flankenwinkel im Bereich von 28° - 35° und ein zwischen der Schaftachse und der zum Schraubenkopf weisenden Gewindeflanke eingeschlossener oberer Flankenwinkel im Bereich von 90° - 95° liegt.

In der Praxis müssen Dämmstoffplatten, wie beispielsweise solche zum Isolieren von Gebäudewänden oder dergleichen, in bestimmten Anwendungsfällen miteinander verbunden werden. Soll zum Beispiel eine bestehende Wandisolierung nachträglich verbessert werden, so können zusätzliche Dämmstoffplatten an den bereits vorhandenen Dämmstoffplatten befestigt werden, wofür speziell ausgebildete Befestigungsschrauben der eingangs genannten Art verwendet werden. Ein weiteres Einsatzgebiet solcher Befestigungsschrauben ist beispielsweise die Herstellung von Dämmstoffplatten, die eine derart große Dicke aufweisen, dass die zur Verdichtung der Dämmstoffplatten erforderliche Presskraft von der Dämmstoffplattenpresse nicht mehr aufgebracht werden kann. In diesem Fall können mehrere Dämmstoffplatten mit geringer Dicke zur Herstellung einer Dämmstoffplatte mit großer Dicke übereinander gelegt und unter Verwendung von Befestigungsschrauben aneinander befestigt werden.

Ein Beispiel einer zum Verbinden von Dämmstoffplatten ausgelegten Befestigungsschraube ist in der DE-U-201 11 194 offenbart. Diese Befestigungsschraube umfasst einen mit einer Mehrkantschlüsseleinsenkung versehenen Schraubenkopf, einen ein Gewinde aufweisenden Schraubenschaft und eine im Querschnitt kreisförmig ausgebildete und spitz zulaufende Schraubenspitze. Das Gewinde ist als Spitzgewinde ausgeführt. Der von den Gewindeflanken eingeschlossene Flankenwinkel ist dabei kleiner als 30° gewählt, wobei ein zwischen der Schaftachse und der zum Schraubenkopf weisenden Gewindeflanke eingeschlossener Winkel und ein zwischen der Schaftachse und der vom Schraubenkopf weg weisenden Gewindeflanke eingeschlossene Winkel in etwa gleich groß sind. Ein wesentlicher Nachteil der in der DE-U-201 11 1 194 beschriebenen Befestigungsschraube kommt bei großen Einschraubtiefen zum Tragen. Das zum Einschrauben der Befestigungsschraube in eine Dämmstoffplatte erforderliche Drehmoment wird mit zunehmender Einschraubtiefe nämlich schnell so groß, dass sich dieses manuell kaum noch aufbringen lässt. Auch kann es vorkommen, dass das maximal zulässige Drehmoment der Befestigungsschraube überschritten wird, was mit einer entsprechenden Beschädigung der Befestigungsschraube einhergeht.

Weitere Schrauben sind in den Druckschriften EP-A-0 504 782, DE-A-199 31 794 und EP-A-0 425 874 offenbart, wobei die EP-A-0504 782 die Merkmale des Oberbegriffs des Anspruchs 1 zeigt.

Ausgehend von diesem Stand der Technik ist es eine Aufgabe der vorliegenden Erfindung, eine Befestigungsschraube der eingangs genannten Art zu schaffen, die derart ausgebildet ist, dass das zum Eindrehen der Befestigungsschraube erforderliche Drehmoment auch bei größeren Einschraubtiefen noch derart gering ist, dass sich auch dicke Dämmstoffplatten problemlos miteinander verbinden lassen.

Zur Lösung dieser Aufgabe schafft die vorliegende Erfindung eine Befestigungsschraube der eingangs genannten Art, die dadurch gekennzeichnet ist, dass die Gewindeflanken spitz zulaufen und vom Schraubenschaft 4 bis 6 mm radial auswärts vorstehen, insbesondere 5 mm.

Bei der Befestigungsschraube gemäß der vorliegenden Erfindung liegt der von den Gewindeflanken eingeschlossene Flankenwinkel im Bereich von 28° - 35° und ein zwischen der Schaftachse und der zum Schraubenkopf weisenden Gewindeflanke eingeschlossener Winkel, der nachfolgend als oberer Flankenwinkel bezeichnet wird, im Bereich von 90° - 95°. Diese Gewindeausbildung führt zu geringen Einschraubdrehmomenten, so dass sich auch sehr dicke Dämmstoffplatten problemlos miteinander verbinden lassen. Grundsätzlich wird in Bezug auf die Verringerung des Einschraubdrehmoments ein oberer Flankenwinkel von 90° bevorzugt. Handelt es sich bei der Befestigungsschraube um ein Spritzgussteil, so kann sich hinsichtlich einer guten Entformbarkeit der Befestigungsschraube aus der Spritzgussform ein geringfügig größerer oberer Flankenwinkel als vorteilhaft erweisen, insbesondere im Bereich von 91° - 95°.

Die Gewindeflanken laufen gemäß der vorliegenden Erfindung spitz zu und stehen vom Schraubenschaft 4 bis 6 mm radial auswärts vor, insbesondere 5 mm. Mit derartig ausgebildeten Gewindeflanken wurden in Bezug auf das Einschraubdrehmoment, die Verdichtung der miteinander zu verbindenden Dämmstoffplatten während des Eindrehens der Befestigungsschraube und einer großen Haltefläche besonders gute Ergebnisse erzielt.

Ein zwischen der Schaftachse und der vom Schraubenkopf wegweisenden Gewindeflanke eingeschlossener Winkel, der nachfolgend als unterer Flankenwinkel bezeichnet wird, liegt bevorzugt im Bereich von 118° **-** 128°. Der von den Gewindeflanken eingeschlossene Flankenwinkel wird also im Wesentlichen durch den unteren Flankenwinkel gebildet.

Die Schraubenspitze ist vorteilhaft als Mehrkantspitze, insbesondere als Vierkantspitze ausgebildet, wodurch die Schraubenspitze mit Schneidkanten versehen wird, die beim Einschrauben der Befestigungsschraube Putzschichten oder dergleichen problemlos durchdringen.

Bevorzugt verjüngt sich der Schraubenschaft in Richtung der Schraubenspitze, wodurch das Einschraubdrehmoment weiter reduziert wird.

Gemäß einer Ausgestaltung der vorliegenden Erfindung ist der Schraubenkopf als Kopfscheibe ausgebildet, in der konzentrisch zur Schaftachse eine Mehrkantschlüsseleinsenkung insbesondere mit am Grund angeformtem Mehrkantzapfen vorgesehen ist. Dank dieser Ausbildung ist es mit einem geeigneten Werkzeug möglich, aufgrund der Verteilung der zu übertragenden Kräfte auf mehrere Flächen und damit einer Reduzierung der örtlichen Flächenpressung ausreichend hohe Drehmomente bei der Montage zu übertragen, ohne dass eine bleibende Verformung im Bereich der Kraftangriffsflächen erfolgt. Ein unerwünschtes Festsetzen des Werkzeugs in der Mehrkantschlüsseleinsenkung wird dabei sicher verhindert.

Vorteilhaft sind an der Kopfscheibe exzentrisch zur Schaftachse voneinander beabstandet Durchbrechungen vorgesehen, die insbesondere entlang eines Kreisbogens angeordnet sind und zur Verklammerung von Putzmaterial oder dergleichen dienen.

An dem zur Kopfscheibe weisenden Schaftende ist bevorzugt ein Übergangskonus ausgebildet, der ein einfaches Versenken der Kopfscheibe begünstigt und den Dämmstoff im Bereich der Einschrauböffnung verdichtet.

Die Befestigungsschraube ist vorteilhaft einteilig als Kunststoffteil, insbesondere als Spritzgussteil hergestellt.

Die Gewindesteigung liegt bevorzugt im Bereich von 6 bis 8 mm und beträgt insbesondere 7,5 mm. Mit einer solchen Gewindesteigung lässt sich eine gute Verdichtung der miteinander zu verbindenden Dämmstoffplatten während des Eindrehens der Befestigungsschraube realisieren, was zu guten Dämmeigenschaften führt. Darüber hinaus wird eine große haltefläche und damit eine sichere Verbindung erzeugt.

Gemäß einer Ausgestaltung der vorliegenden Erfindung ist das Gewinde an einem sich in Richtung der Schraubenspitze kontinuierlich verjüngenden Schraubenschaftabschnitt ausgebildet. Ein solcher sich kontinuierlich verjüngender Schraubenschaftabschnitt verringert zum einen das Einschraubdrehmoment und führt zum anderen zu einer sich kontinuierlich erhöhenden Verdichtung der miteinander zu verbindenden Dämmstoffplatten während des Eindrehens der Befestigungsschraube.

Bevorzugt verringert sich der Außendurchmesser in dem sich kontinuierlich verjüngenden Schraubenschaftabschnitt um 15 bis 25 %, insbesondere um 20 %. Bei einer derartigen Verjüngung wurden besonders gute Ergebnisse erzielt.

Bei der erfindungsgemäßen Befestigungsschraube handelt es sich vorteilhaft um eine Dämmstoffplattenbefestigungsschraube, die speziell zum Verbinden von Dämmstoffplatten ausgelegt ist.

Weitere Vorteile und Merkmale werden anhand der nachfolgenden Beschreibung einer Ausführungsform einer erfindungsgemäßen Befestigungsschraube unter Bezugnahme auf die beiliegende Zeichnung deutlich. Darin ist
- **Figur 1:**: eine Seitenansicht einer Befestigungsschraube gemäß einer Ausführungsform der vorliegenden Erfindung, die zum Verbinden von Dämmstoffplatten ausgelegt ist;
- **Figur 2:**: eine Draufsicht der in Figur 1 gezeigten Befestigungsschraube;
- **Figur 3:**: eine perspektivische Ansicht der Befestigungsschraube und
- **Figur 4:**: eine perspektivische Unteransicht der Befestigungsschraube; und
- **Figur 5:**: eine Unteransicht der Befestigungsschraube.

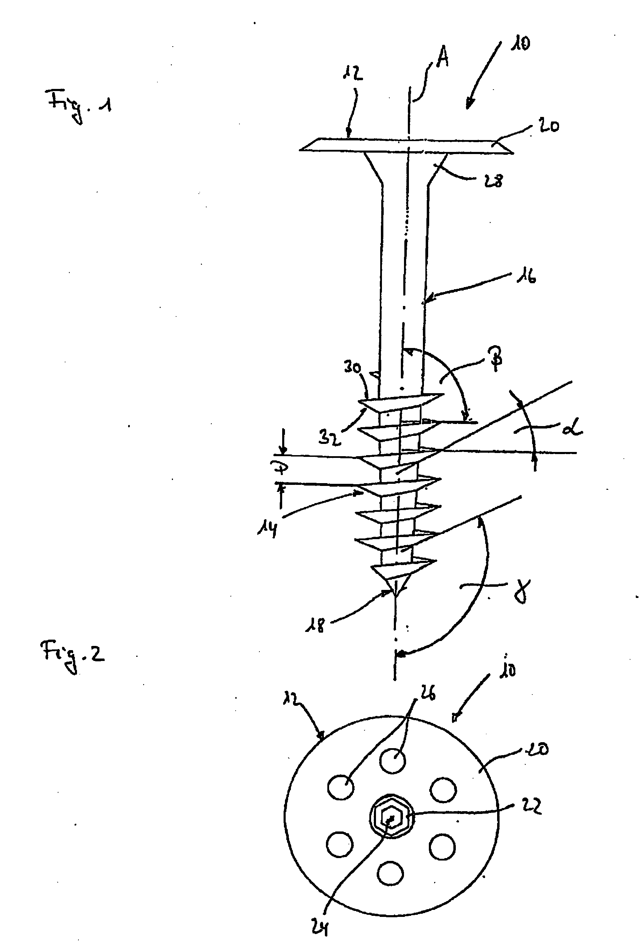

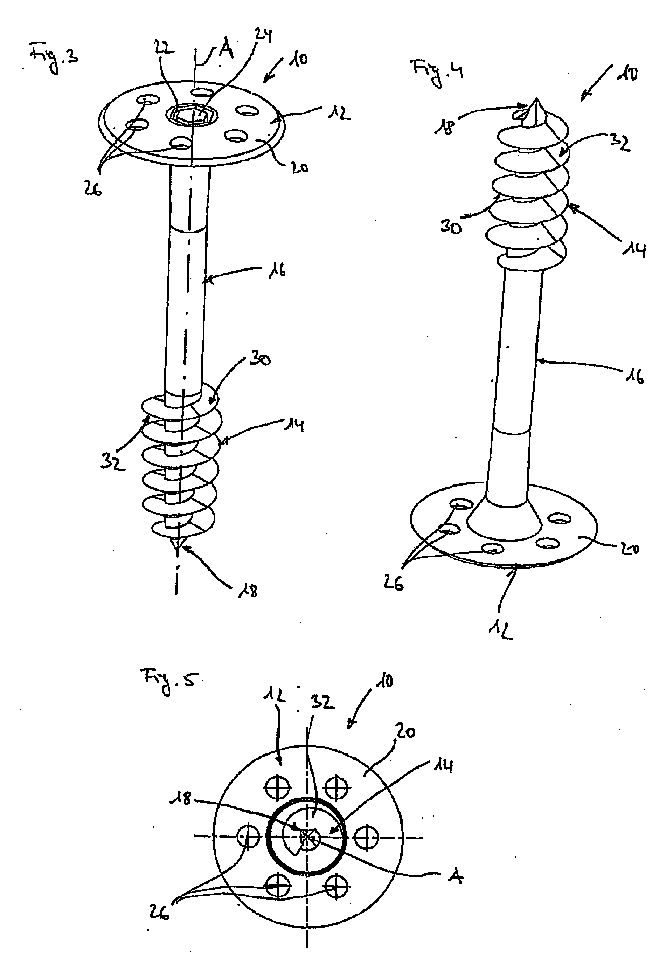

Die Figuren 1 bis 5 zeigen eine Befestigungsschraube 10 gemäß einer Ausführungsform der vorliegenden Erfindung, die zum Verbinden von Dämmstoffplatten ausgelegt ist. Bei der Befestigungsschraube 10 handelt es sich um ein Kunststoffspritzgussteil mit einem Schraubenkopf 12, einem ein Gewinde 14 aufweisenden Schraubenschaft 16 und einer Schraubenspitze 18.

Der Schraubenkopf 12 umfasst eine Kopfscheibe 20, in der konzentrisch zur Schaftachse A eine Mehrkantschlüsseleinsenkung 22 mit am Grund angeformtem Mehrkantzapfen 24 vorgesehen ist. An der Kopfscheibe 20 sind exzentrisch zur Schaftachse A voneinander beabstandet zylindrische Durchbrechungen 26 vorgesehen, die entlang eines die Schaftachse A als Mittelpunkt aufweisenden Kreisbogens angeordnet sind und zur Verklammerung von Putzmaterial oder dergleichen dienen. Ausgehend von der Kopfscheibe 20 erstreckt sich senkrecht zu dieser der Schraubenschaft 16, wobei zwischen der Kopfscheibe 20 und dem Schraubenschaft 16 ein Übergangskonus 28 vorgesehen ist. Im Bereich des freien Endes des Schraubenschafts 16 ist das in der Schraubenspitze 18 endende Gewinde 14 angeordnet, das sich etwa über I/3 - 1/2 der Länge des Schraubenschaftes 16 erstreckt. Der von der oberen Gewindeflanke 30 und der unteren Gewindeflanke 32 des Gewindes 14 eingeschlossene Flankenwinkel α beträgt 30°, ein zwischen der Schaftachse A und der zum Schraubenkopf 12 weisenden oberen Gewindeflanke 30 eingeschlossener oberer Flankenwinkel beträgt vorliegend 90°, ein zwischen der Schaftachse A und der vom Schraubenkopf 12 wegweisenden unteren Gewindeflanke 32 eingeschlossener unterer Flankenwinkel ? beträgt 120° und die Steigung P ist 7,5 mm. Der Durchmesser des Schraubenschafts 16 verjüngt sich in Richtung der Schraubenspitze 18. Die Schraubenspitze 18 ist als Vierkantspitze ausgebildet.

Aufgrund der Tatsache, dass der obere Flankenwinkel β 90° beträgt, ist das Einschraubdrehmoment beim Einschrauben der Befestigungsschraube 10 in eine Dämmstoffplatte sehr gering. Der obere Flankenwinkel β kann auch geringfügig größer als 90° gewählt werden, insbesondere im Bereich von 90° bis 95°, was sich hinsichtlich einer guten Entformbarkeit der Befestigungsschraube 10 aus der Spritzgussform als vorteilhaft erweisen kann.

Der Flankenwinkel α kann im Bereich von 28° bis 35° liegen und der untere Flankenwinkel entsprechend in einem Bereich von 118° bis 128°.

Die Ausbildung der Schraubenspitze 18 als Vierkantspitze ist dahingehend von Vorteil, dass die Schraubenspitze 18 beim Einschrauben der Befestigungsschraube 10 in eine Dämmstoffplatte Putzschichten oder dergleichen, die auf der Dämmstoffplatte aufgetragen sind, problemlos durchdringen kann.

Dank der Ausbildung des Schraubenkopfes 12 als Kopfscheibe 20 mit Mehrkantschlüsseleinsenkung 22 und am Grund angeformtem Mehrkantzapfen 24 ist es mit einem geeigneten Werkzeug möglich, aufgrund der Verteilung der zu übertragenden Kräfte auf mehrere Flächen und damit einer Reduzierung der örtlichen Flächenpressung ausreichend hohe Drehmomente bei der Montage zu übertragen, ohne dass eine bleibende Verformung im Bereich der Kraftangriffsflächen erfolgt. Ein unerwünschtes Festsetzen des Werkzeugs in der Mehrkantschlüsseleinsenkung 22 wird dabei sicher verhindert.

Der an dem zur Kopfscheibe 20 weisenden Schaftende des Schraubenschaftes 16 vorgesehene Übergangskonus 28 begünstigt ein einfaches Versenken der Kopfscheibe 20 und verdichtet den Dämmstoff im Bereich der Einschrauböffnung während des Einschraubens der Befestigungsschraube 10 .

### Bezugszeichenliste

- 10: Befestigungsschraube
- 12: Schraubenkopf
- 14: Gewinde
- 16: Schraubenschaft
- 18: Schraubenspitze
- 20: Kopfscheibe
- 22: Mehrkantschlüsseleinsenkung
- 24: Mehrkantzapfen
- 26: Durchbrechung
- 28: Übergangskonus
- 30: obere Gewindeflanke
- 32: untere Gewindeflanke

- A: Schaftachse
- α: Flankenwinkel
- β: obere Flankenwinkel
- γ: untere Flankenwinkel

## Patentansprüche

1. Befestigungsschraube (10) zum Verbinden von Dämmstoffplatten mit einem Schraubenkopf (12), einem ein Gewinde (14) aufweisenden Schraubenschaft (16) und einer Schraubenspitze (18), wobei der von den Gewindeflanken (30, 32) eingeschlossene Flankenwinkel (α) im Bereich von 28° - 35° und ein zwischen der Schaftachse (A) und der zum Schraubenkopf (12) weisenden Gewindeflanke (30) eingeschlossener oberer Flankenwinkel (β) im Bereich von 90° - 95° liegt, **dadurch gekennzeichnet, dass** die Gewindeflanken spitz zulaufen und vom Schraubenschaft (16) 4 bis 6 mm radial auswärts vorstehen, insbesondere 5 mm.

2. Befestigungsschraube (10) nach Anspruch 1 , **dadurch gekennzeichnet, dass** ein zwischen der Schaftachse (a) und der vom Schraubenkopf (12) weg weisenden Gewindeflanke (32) eingeschlossener unterer Flankenwinkel (γ) im Bereich von 113° - 125° liegt.

3. Befestigungsschraube (10) nach einem der vorhergehenden Ansprüche, **dadurch gekennzeichnet, dass** die Schraubenspitze (18) als Mehrkantspitze, insbesondere als Vierkantspitze ausgebildet ist.

4. Befestigungsschraube (10) nach einem der vorhergehenden Ansprüche. **dadurch gekennzeichnet, dass** sich der Schraubenschaft (16) in Richtung der Schraubenspitze (18) verjüngt.

5. Befestigungsschraube (10) nach einem der vorhergehenden Ansprüche, **dadurch gekennzeichnet, dass** der Schraubenkopf (12) als Kopfscheibe (20) ausgebildet ist, in der konzentrisch zur Schaftachse (A) eine Mehrkantschlüsseleinsenkung (22) insbesondere mit am Grund angeformtem Mehrkantzapfen (24) vorgesehen ist.

6. Befestigungsschraube (10) nach Anspruch 5, **dadurch gekennzeichnet, dass** an der Kopfscheibe (20) exzentrisch zur Schaftachse (A) voneinander beabstandet Durchbrechungen (26) vorgesehen sind, die insbesondere entlang eines Kreisbogens angeordnet sind und insbesondere zur Putzverklammerung dienen.

7. Befestigungsschraube (10) nach Anspruch 5 oder 6, **dadurch gekennzeichnet, dass** an dem zur Kopfscheibe (20) weisenden Schaftende ein Übergangskonus (28) ausgebildet ist.

8. Befestigungsschraube (10) nach einem der vorhergehenden Ansprüche, **dadurch gekennzeichnet, dass** diese einteilig als Kunststoffteil, insbesondere als Spritzgussteil hergestellt ist.

9. Befestigungsschraube (10) nach einem der vorhergehenden Ansprüche, **dadurch gekennzeichnet, dass** die Gewindesteigung (P) im Bereich von 6 bis 8 mm liegt, insbesondere 7,5 mm beträgt.

10. Befestigungsschraube (10) nach einem der vorhergehenden Ansprüche, **dadurch gekennzeichnet, dass** das Gewinde (14) an einem sich in Richtung der Schraubenspitze (18) kontinuierlich verjüngenden Schraubenschaftabschnitt ausgebildet ist.

11. Befestigungsschraube (10) nach Anspruch 10, **dadurch gekennzeichnet, dass** sich der Außendurchmesser in dem sich kontinuierlich verjüngenden Schaftabschnitt um 15 bis 25 % verringert, insbesondere um 20 %.

12. Befestigungsschraube (10) nach einem der vorhergehenden Ansprüche, **dadurch gekennzeichnet, dass** die Befestigungsschraube eine Dämmstoffplattenbefestigungsschraube ist.

## Claims

1. A fastening screw (10) for joining insulating boards, comprising a screw head (12), a screw shaft (16) that has a thread (14) and a screw tip (18), the flank angle (α) enclosed by the thread flanks (30, 32) being in the range of 28° - 35°, and an upper flank angle (ß) enclosed between the shaft axis (A) and the thread flank (30) pointing towards the screw head (12) being in the range of 90° - 95°, **characterised in that** the thread flanks taper and project radially outwards from the screw shaft (16) by 4 to 6 mm, in particular by 5 mm.

2. The fastening screw (10) according to Claim 1, **characterised in that** a lower flank angle (γ) enclosed between the shaft axis (A) and the thread flank (32) pointing away from the screw head (12) is in the range of 113° - 125°.

3. The fastening screw (10) according to either of the preceding claims, **characterised in that** the screw tip (18) is in the form of a polygonal tip, in particular in the form of a square tip.

4. The fastening screw (10) according to any of the preceding claims, **characterised in that** the screw shaft (16) tapers towards the screw tip (18).

5. The fastening screw (10) according to any of the preceding claims, **characterised in that** the screw head (12) is in the form of a head disc (20) in which a polygonal key recess (22) is provided concentrically to the shaft axis (A), in particular with polygonal pins (24) moulded onto the base.

6. The fastening screw (10) according to Claim 5, **characterised in that** there are provided on the head disc (20), eccentrically to the shaft axis (A), spaced apart through holes (26) which are arranged in particular along the arc of a circle and are used in particular for plaster anchoring.

7. The fastening screw (10) according to Claim 5 or 6, **characterised in that** a transition cone (28) is formed on the end of the shaft pointing towards the head disc (20).

8. The fastening screw (10) according to any of the preceding claims, **characterised in that** the latter is produced in one part as a plastic part, in particular as an injection moulded part.

9. The fastening screw (10) according to any of the preceding claims, **characterised in that** the thread pitch (P) is in the range of 6 to 8 mm, in particular 7.5 mm.

10. The fastening screw (10) according to any of the preceding claims, **characterised in that** the thread (14) is formed on a section of the screw shaft continuously tapering towards the screw tip (18).

11. The fastening screw (10) according to Claim 10, **characterised in that** the outside diameter in the continuously tapering shaft section is reduced by 15 to 25 %, in particular by 20 %.

12. The fastening screw (10) according to any of the preceding claims, **characterised in that** the fastening screw is an insulating board fastening screw.

## Revendications

1. Vis de fixation (10) pour la liaison de plaques isolantes avec une tête de vis (12) ; une tige de vis (16) présentant un filetage (14) ; et une pointe de vis (18), l'angle de flanc (a) enclavé par les flancs de filetage (30, 32) étant d'environ 28 à 35 ° et un angle de flanc (ß) entre l'axe de la tige (A) et le flanc de filetage (30) orienté vers la tête de vis (12) étant d'environ 90 et 95, **caractérisée en ce que** les flancs de filetage terminent en pointe et saillissent d'environ 4 à 6 mm, plus précisément de 5 mm, en direction radiale, vers l'extérieur de la de la tige de vis (16).

2. Vis de fixation (10) selon la revendication 1, **caractérisée en ce qu'**un angle de flanc (γ) entre l'axe de la tige (a) et le flanc de filetage (32) orienté à l'opposé de la tête de vis (12) est d'environ 113 à 125 °.

3. Vis de fixation (10) selon l'une des revendications précédentes, **caractérisée en ce que** la pointe de vis (18) est formée en pointe polygonale, plus précisément en pointe carrée.

4. Vis de fixation (10) selon l'une des revendications précédentes, **caractérisée en ce que** la tige de vis (16) s'amincit en direction de la pointe de tige (18).

5. Vis de fixation (10) selon l'une des revendications précédentes, **caractérisée en ce que** la tête de vis (12) est formée en disque de tête (20) dans lequel est prévue une dépression à clé polygonale concentrique à l'axe de tige (A), plus précisément avec un tourillon polygonal (24) formé dans la base.

6. Vis de fixation (10) selon la revendication 5, **caractérisée en ce que** le disque de tête (20) comporte des percées (26) excentriques à l'axe de tige (A) distancées l'une de l'autre et, plus précisément, disposées le long d'un arc de cercle qui, plus précisément, servent au cramponnage à l'enduit.

7. Vis de fixation (10) selon la revendication 5 ou 6, **caractérisée en ce que** l'extrémité de tige dirigée vers le disque de tête (20) est pourvue d'un cône de transition (28).

8. Vis de fixation (10) selon l'une des revendications précédentes, **caractérisée en ce qu'**elle est fabriquée en une seule pièce en plastique, plus précisément par moulage à injection.

9. Vis de fixation (10) selon l'une des revendications précédentes, **caractérisée en ce que** le pas de filetage (P) est compris entre 6 et 8mm, plus précisément 7,5 mm.

10. Vis de fixation (10) selon l'une des revendications précédentes, **caractérisée en ce que** le filetage (14) est formé sur une section de la tige de vis qui s'amincit continuellement en direction de la pointe de vis (18).

11. Vis de fixation (10) selon l'une des revendications précédentes, **caractérisée en ce que** le diamètre extérieur de la section de la tige de vis qui s'amincit continuellement se réduit de 15 à 25 %, plus précisément de 20 %.

12. Vis de fixation (10) selon l'une des revendications précédentes, **caractérisée en ce que** la vis de fixation est une vis de fixation de plaques isolantes.
